# EUROPÄISCHE PATENTSCHRIFT

(11) **EP 0 685 356 B1**
(45) Veröffentlichungstag und Bekanntmachung des Hinweises auf die Patenterteilung: **16.09.1998**
(21) Anmeldenummer: 95106150.6
(22) Anmeldetag: 25.04.1995
(51) Int. Cl.: B60J 7/057, B60R 16/02

(54) **Elektronisches Schliesssystem für Kraftfahrzeuge**
Electronic closing system for vehicles
Système de fermeture électronique pour véhicules

(30) Priorität: 31.05.1994 DE 4418902
(43) Veröffentlichungstag der Anmeldung: 06.12.1995
(73) Patentinhaber: Ford-Werke Aktiengesellschaft, 50735 Köln (DE); FORD FRANCE SOCIETE ANONYME, 92506 Rueil Malmaison Cedex (FR); FORD MOTOR COMPANY LIMITED, Brentwood, Essex CM13 3BW (GB)
(72) Erfinder: Nussbaum, Hans Jürgen, D-50170 Kerpen (DE)
(74) Vertreter: Bonsmann, Manfred, Dipl.-Ing.

(56) Entgegenhaltungen:
- EP-A- 0 368 257
- DE-A- 3 717 354
- DE-A- 4 022 300

## Beschreibung

Die Erfindung betrifft ein elektronisches Schließsystem für Kraftfahrzeuge mit über Einzelbetätigungsschalter elektrisch betätigbaren Fenstern und mit einem auch zur Betätigung des Fahrertürfensters vorgesehenen Mehrfachfensterheberschalter und mit über Türschloßschalter aktivierbaren Schließmodulen zum automatischen Schließen offener Fenster bei verschließen des Kraftfahrzeugs.

Derartige Schließsysteme sind bekannt. Dabei wird zum elektrischen Schließen offener Fenster auch nach Abschaltung der Zündung bei Betätigung des Türschloßschalters eine Bereitschaftsschaltung, welche die Steuerschaltung für die elektrischen Fensterheber aktiviert hält, eingeschaltet.

Bei einer bekannten Ausführungsform ist jedem elektrisch betätigbaren Fenster ein eigenes Schließmodul zugeordnet. Dies ist eine aufwendige und damit teure Lösung.

Bei einer weiteren bekannten Ausführungsform ist jeweils den Fenstern in der Fahrertür und der Beifahrertür ein Schließmodul zugeordnet, und die auf der gleichen Seite des Fahrzeugs nach hinten anschließenden Fenster, also die Fenster hinter dem Fahrersitz und hinter dem Beifahrersitz, werden gleichzeitig von dem jeweils dem Fenster der Fahrertür oder der Beifahrertür zugeordneten Schließmodul angesteuert. Zwischen diesen beiden Schließmodulen ist ein Datenbus (sog. Multiplex) vorgesehen. Das der Beifahrertür zugeordnete Schließmodul erhält seine Befehle über den Datenbus von dem der Fahrertür zugeordneten Schließmodul, d.h., auch der normale Fensterbetätigungsvorgang wird über diese Einrichtung gesteuert.

Wenn beispielsweise der Fahrer des Kraftfahrzeugs das Fenster in der Beifahrertür und das Fenster hinten rechts öffnen möchte, betätigt er den entsprechenden Mehrfachfensterheberschalter. Die Schaltersignale werden von dem Datenbus in Datenbussignale umgewandelt. Diese Signale werden dann von dem dem Beifahrertürfenster zugeordneten Schließmodul verarbeitet, und anschließend werden die entsprechenden Befehle ausgeführt. Wenn aus irgendeinem Grunde die Elektronik des Schließmodules ausfällt, beispielsweise die Betriebsspannung fehlt od. dgl., kann keine Betätigung der Fenster in der Beifahrertür und hinten rechts vom Fahrer her erfolgen. Darüber hinaus ist diese bekannte Schaltanordnung kostenaufwendig.

Aus der EP 0 368 257 A1 ist ein elektronisches Schließsystem mit einem einzigen zentralen Steuerungsmodul bekannt. Dieses Modul wertet die von allen Fensterheberschaltern kommenden Signale aus und steuert die den einzelnen Fenstern zugeordneten Motoren an. Hierbei ist von Nachteil, daß nicht nur bei der automatischen Schließfunktion aller offenen Fenster bei verschließen des Kraftfahrzeuges, sondern auch bei der normalen Schließfunktion bei einem Ausfall der Elektronik eine Fensterbetätigung nicht mehr möglich ist, da alle Signale über das zentrale Steuermodul geleitet werden und somit auch von Einzelbetätigungsschaltern kommende Schaltsignale nicht mehr ausgewertet werden können. Außerdem ist durch das zentrale Steuerungsmodul ein erheblicher Leitungsaufwand erforderlich.

Der Erfindung liegt die Aufgabe zugrunde, elektronische Schließsysteme der eingangs genannten Art dahingehend zu verbessern, daß sie mit geringen Kosten und möglichst geringem Leitungsaufwand realisierbar sind und möglichst funktionssicher arbeiten.

Die Lösung der genannten Aufgabe erfolgt gemäß den Merkmalen des Patentanspruches 1.

Es sind somit insgesamt zwei Schließmodule vorgesehen, und zwar das Einzelschließmodul und das Zusatzschließmodul, wobei das Zusatzschließmodul elektrisch wie ein zusätzlicher Fensterheberschalter geschaltet ist. Hierbei ist zum einen vorteilhaft, daß bei einem Ausfall der Schließmodulelektronik des Zusatzschließmoduls die Fenster durch Betätigung des Mehrfachfensterheberschalters normal betätigt werden können. Zum anderen ist der für die Realisierung erforderliche zusätzliche Leitungsaufwand gegenüber einem Kraftfahrzeug ohne ein derartiges "global-closing" gering, da die bereits im Fahrzeug vorhandenen Leitungen verwendet werden können und - abgesehen von wenigen Zuführungsleitungen zu dem Zusatzschließmodul - keine zusätzlichen Leitungen erforderlich sind. Ausgehend von einem Kraftfahrzeug mit Betätigungsschaltern für das Betätigen von Fensterhebern und ggf. eines elektrisch betätigbaren Schiebedachs ist somit der Bedarf an zusätzlichen Leitungen zur Realisierung des erfindungsgemäßen Schließsystems gering, da das Zusatzschließmodul in die ohnehin vorgesehene elektrische Leitungsführung eingebaut wird, und die elektrische Leitungsführung bei Kraftfahrzeugen, in denen kein derartiges "global-closing" vorgesehen sein soll, an der für das Zusatzschließmodul vorgesehenen Stelle einfach überbrückt werden kann.

Vorzugsweise weist das elektrische Schließsystem eine Bereitschaftsschaltung auf. Diese Bereitschaftsschaltung wird nach einem vorherbestimmten Zeitintervall nach Abschalten der Zündung automatisch abgeschaltet. Das Zeitintervall kann dabei beispielsweise fünf Minuten lang sein. Eine Deaktivierung der Bereitschaftsschaltung kann auf diese Weise unabhängig von den Türkontaktschaltern durchgeführt werden.

Die Erfindung wird nachfolgend anhand des in der Zeichnung schematisch dargestellten Ausführungsbeispiels näher erläutert. Es zeigen:
- Fig. 1: eine Ausführungsform des erfindungsgemäßen Schließsystems;
- Fig. 2: eine Schaltanordnung zum Schalten der Türkontaktschalter des erfindungsgemäßen Schließsystems.

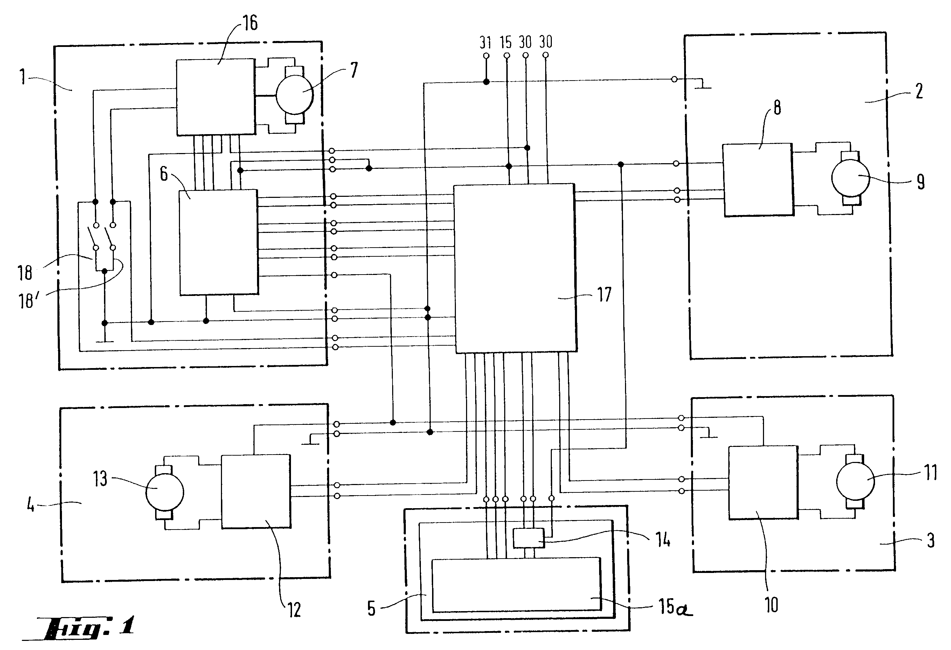

Bei der in Fig. 1 dargestellten Ausführungsform des erfindungsgemäßen Schließsystems sind in einer Fahrertür 1 ein Mehrfachfensterheberschalter 6, ein Betätigungsmotor 7 zum Betätigen des Fahrertürfensters, ein Einzelschließmodul 16 sowie Türschloßschalter 18 und 18' angeordnet. In einer Beifahrertür 2 sind ein Einzelbetätigungsschalter 8 und ein Betätigungsmotor 9 zum Betätigen des Fensters der Beifahrertür vorgesehen. In einer rechten hinteren Tür 3 ist ein Einzelbetätigungsschalter 10 und ein Betätigungsmotor 11 zum Betätigen des Fensters dieser Tür vorgesehen. In einer mit 4 bezeichneten linken hinteren Tür ist ein Einzelbetätigungsschalter 12 und ein Betätigungsmotor 13 zum Betätigen des Fensters dieser Tür vorgesehen. Ein Schiebedach 5 ist mit einem Schiebedachbetätigungsschalter 14 und einem Betätigungsmotor 15a zum Betätigen des verschiebbaren Teils des Schiebedaches versehen. Die Einzelbetätigungsschalter 6, 8, 10 und 12 sowie der Schiebedachbetätigungsschalter 14 sind miteinander über ein Zusatzschließmodul 17 verbunden, das an Versorgungsleitungen 15 und 30 angelegt ist. Wird das Kraftfahrzeug unter Betätigung der Türschloßschalter 18, 18' in der Fahrertür 1 verriegelt, so wird der Betätigungsmotor 7 des eventuell offenstehenden Fensters dieser Tür über das Einzelschließmodul 16 betrieben, um dieses Fenster zu schließen.

Gleichzeitig werden von dem Zusatzschließmodul 17 der Betätigungsmotor 9 über den Einzelbetätigungsschalter 8, der Betätigungsmotor 11 über den Einzelbetätigungsschalter 10, der Betätigungsmotor 13 über den Einzelbetätigungsschalter 12 und der Betätigungsmotor 15a über den Schiebedachbetätigungsschalter 14 angesteuert, um die entsprechenden Fenster in den entsprechenden Türen bzw. das Schiebedach zu schließen. Auf diese Weise wird unter Mitwirkung des Einzelschließmoduls 16 und des Zusatzschließmoduls 17 das Kraftfahrzeug insgesamt vollständig abgeschlossen.

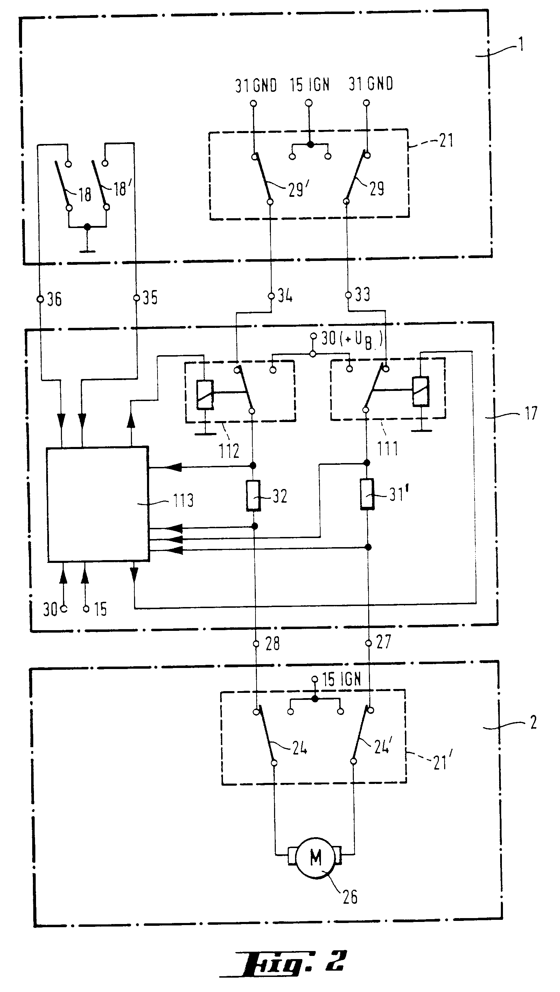

Bei der in Fig. 2 dargestellten Schaltanordnung ist im Mehrfachfensterheberschalter 6 in der Fahrertür 1 ein Fensterheberschalter 21 für das Beifahrertürfenster an Versorgungsleitungen 15 und 31 angeschlossen. Der Zusatz IGN bei 15 bedeutet "Zündung" und der Zusatz "GND" bedeutet "Masse". Entsprechend ist in der Beifahrertür 2 der Einzelbetätigungsschalter 21' an Versorgungsleitungen 27, 28 und 15 angeschlossen. An den Kontakten 24 und 24' des Einzelbetätigungsschalter 21' ist ein Betätigungsmotor 26 angeschlossen. Der Fensterheberschalter 21 der Fahrertür ist mit Schaltkontakten von Relaisschaltern 111 bzw. 112 verbunden. Der Relaisschalter 111 ist dabei über einen Shunt 31' mit einem Anschluß 27 des Einzelbetätigungsschalter 21' verbunden, und der Relaisschalter 112 ist über einen Shunt 32 mit einem Anschluß 28 des Einzelbetätigungsschalter 21' verbunden.

Wird der Kontakt 29 des Fensterheberschalters 21 derart betätigt, daß er den Anschluß 33 mit der Versorgungsleitung 15 verbindet, so wird die an der Versorgungsleitung 15 anliegende Batteriespannung über den Schaltkontakt des Relaisschalters 111 und über den Shunt 31' an den Betätigungsmotor 26 übertragen und somit das Fenster der Beifahrertür geschlossen. Bleibt dagegen der Kontakt 29 des Fensterheberschalters 21 in der dargestellten Position, in der er den Anschluß 33 mit dem Anschluß 31 GND verbindet, und wird der Kontakt 29' derart betätigt, daß er den Anschluß 34 mit der Versorgungsleitung 15 verbindet, so wird die Batteriespannung 15 IGN über den Schaltkontakt des Relaisschalters 112 und über den Shunt 32 an den Motor 26 angelegt und somit das Fenster geöffnet. Das Fenster kann also über den Fensterheberschalter 21 und den Einzelbetätigungsschalter 21' nur bei eingeschalteter Zündung (Versorgungsleitung 15) geöffnet bzw. geschlossen werden. Wird bei ausgeschalteter Zündung der Türschloßschalter 18 betätigt, so steuert der dem Beifahrertürfenster zugeordnete Teil der Elektronik 113 des Zusatzschließmoduls 17 den Relaisschalter 111 an, und der Schaltkontakt des Relaisschalters 111 schaltet den Anschluß 27 über den Shunt 31' an die Batteriespannung 30. Somit wird die Batteriespannung 30 dem Motor 26 zugeführt, und das Fenster wird geschlossen.

Die über die Shunts 31' und 32 abfallende Spannung ist ein Maß für den Strom durch den Motor 26 und dient zur Abschaltung des Motors 26, sobald dieser die jeweilige Endposition erreicht hat.

Die Steuerelektronik der Schließmodule kann dabei derart ausgelegt sein, daß die Funktion "globales schließen" für eine zu definierende Zeit über die Türschloßschalter 18, 18' aktiviert werden kann. Die in dieser Beschreibung dargestellten Funktionen können auch für eine Funktion "globales Öffnen" ausgelegt sein.

## Patentansprüche

1. Elektronisches Schließsystem für Kraftfahrzeuge mit über Einzelbetätigungsschalter (8,10,12; 21') elektrisch betätigbaren Fenstern und mit einem auch zur Betätigung des Fahrertürfensters vorgesehenen, der Fahrertür zugeordneten Mehrfachfensterheberschalter (6; 21) und mit über Türschloßschalter (18,18') aktivierbaren Schließmodulen (16,17) zum automatischen schließen offener Fenster bei einem Verschließen des Kraftfahrzeugs, dadurch gekennzeichnet, daß ein dem elektrisch betätigbaren Fahrertürfenster zugeordnetes Einzelschließmodul (16) und ein gemeinsam den anderen elektrisch betätigbaren Fahrzeugfenstern und ggf. einem elektrisch betätigbaren Schiebedach (5) zugeordnetes, gemeinsam mit dem Einzelschließmodul (16) aktivierbares Zusatzschließmodul (17) vorgesehen ist, und daß das Einzelschließmodul (16) elektrisch zwischen dem Mehrfachfensterheberschalter (6; 21) und dem dem Fahrertürfenster zugeordneten Betätigungsmotor (7) liegt, und daß das Zusatzschließmodul (17) elektrisch vor den den übrigen elektrisch betätigbaren Fenstern und dem ggf. vorgesehenen Schiebedach (5) zugeordneten Einzelbetätigungsschaltern (8, 10, 12, 14; 21') mit jeweils nachgeschalteten Betätigungsmotoren (9, 11, 13, 15; 26) und hinter dem Mehrfachfensterheberschalter (6; 21) liegt.

2. Elektronisches Schließsystem nach Anspruch 1, dadurch gekennzeichnet, daß eine Bereitschaftsschaltung zum Aktivieren/Deaktivieren der Schließmodule (16, 17) vorgesehen ist.

## Claims

1. Electronic closure system for motor vehicles, comprising windows electrically actuatable by means of individual actuating switches (8, 10, 12; 21'); a multiple window lift switch (6; 13'), associated with the driver door, for actuation of the driver door window; and closure modules (16, 17), actuatable by means of door locking switches (18, 18'), for automatic closure of open windows on locking the vehicle, characterised in that: an individual closure module (16) associated with the electrically actuatable driver door window and an additional closure module (17) associated in common with the other electrically actuatable vehicle windows and optionally with an electrically actuatable sunroof (5) are provided; the individual closure module (16) lies electrically between the multiple window lift switch (6; 21') and the actuating motor (7) associated with the driver door window; and the additional closure module (17) lies electrically before the individual actuating switches (8, 10, 12, 14; 21') which are associated with the other electrically actuatable windows and with the sunroof (5) (if provided) and have respective actuating motors (9, 11, 13, 15: 26) connected in series with them, and after the multiple window lift switch (6; 21).

2. Electronic closure system according to claim 1, characterised in that a standby switch is provided for activation/deactivation of the closure modules (16, 17).

## Revendications

1. Système de fermeture électronique pour véhicules automobiles, comprenant des vitres pouvant être actionnées électriquement au moyen de commutateurs d'actionnement individuels (8, 10, 12 ; 21'), un commutateur combiné (6 ; 21) de lève-vitre, associé à la porte de conducteur et servant également à actionner la vitre de porte de conducteur, et des modules de fermeture (16, 17) pouvant être activés au moyen de commutateurs (18, 18') de serrure de porte et destinés à fermer automatiquement les vitres ouvertes lorsqu'on ferme à clé le véhicule automobile, **caractérisé** en ce qu'il est prévu un module de fermeture individuel (16) associé à la vitre de porte de conducteur à actionnement électrique, et un module de fermeture auxiliaire (17), associé conjointement aux autres vitres à actionnement électrique du véhicule et éventuellement à un toit ouvrant (5) à actionnement électrique, et pouvant être activé conjointement avec le module de fermeture individuel (16), en ce que le module de fermeture individuel (16) se trouve électriquement entre le commutateur combiné (6 ; 21) de lève-vitre et le moteur d'actionnement (7) associé à la vitre de porte de conducteur, et en ce que le module de fermeture auxiliaire (17) se trouve électriquement avant les commutateurs d'actionnement individuels (8, 10, 12, 14 ; 21'), associés aux autres vitres à actionnement électrique et au toit ouvrant (5) éventuellement prévu et à la suite desquels sont reliés des moteurs d'actionnement respectifs (9, 11, 13, 15 ; 26), et après le commutateur combiné (6 ; 21) de lève-vitre.

2. Système de fermeture électronique selon la revendication 1, **caractérisé** en ce qu'il est prévu un montage de mise en veille pour activer/désactiver les modules de fermeture (16, 17).
